# EUROPEAN PATENT APPLICATION

(11) **EP 1 577 352 A1**
(43) Date of publication of application: **21.09.2005**
(21) Application number: 03786264.6
(22) Date of filing: 24.12.2003
(51) Int. Cl.: C09D 1/00, B82B 1/00

(54) **LIQUID MIXTURE, STRUCTURE, AND METHOD FOR FORMING STRUCTURE**

(30) Priority: 25.12.2002 JP 2002374110; 30.05.2003 JP 2003154114
(71) Applicant: FUJI XEROX CO., LTD., Tokyo, 107-0052 (JP)
(72) Inventor: MANABE, Chikara, Fuji Xerox Co., Ltd., Ashigarakami-gun, Kanagawa 259-0157 (JP); KISHI, Kentaro, Fuji Xerox Co., Ltd., Ashigarakami-gun, Kanagawa 259-0157 (JP); SHIGEMATSU, Taishi, Fuji Xerox Co., Ltd., Ashigarakami-gun, Kanagawa 259-0157 (JP); YOSHIZAWA, Hisae, Fuji Xerox Co., Ltd., Ashigarakami-gun, Kanagawa 259-0157 (JP); WATANABE, Miho, Fuji Xerox Co., Ltd., Ashigarakami-gun, Kanagawa 259-0157 (JP); SHIMOTANI, Kei, Fuji Xerox Co., Ltd., Ashigarakami-gun, Kanagawa 259-0157 (JP); WATANABE, Hiroyuki, Fuji Xerox Co., Ltd., Ashigarakami-gun, Kanagawa 259-0157 (JP); SHIMIZU, Masaaki, Fuji Xerox Co., Ltd., Ashigarakami-gun, Kanagawa 259-0157 (JP)
(74) Representative: Forstmeyer, Dietmar
(86) International application number: PCT/JP2003/016547
(87) International publication number: WO 2004/058899

(57) **Abstract**

The present invention provides a structure composed substantially only of carbon nanotubes each having a functional group, the structure being obtained by using a liquid mix characterized by including: the carbon nanotubes; and a crosslinking agent capable of prompting a crosslinking reaction with the functional group. The structure has a network structure in which the carbon nanotubes are surely connected to each other. The present invention also provides a method of forming the structure.

## Description

### TECHNICAL FIELD

The present invention relates to a liquid mixture and a structure each containing a carbon nanotube that can be suitably used for producing an electron device, an electron material, a structural material, or the like utilizing properties of a carbon nanotube, and a method of forming a structure.

### BACKGROUND ART

A carbon nanotube that was discovered in 1991 has been attracting attention as an allotrope of carbon different from conventionally known allotropes of carbon such as graphite, amorphous carbon, and diamond. The reason why the carbon nanotube has been attracting attention is that the carbon nanotube exhibits specific electron properties different from those of conventional carbon substances.

A carbon nanotube is a new material using only carbon as a constituent, and is found to, for example, have a photofunctional effect, function as a semiconductor material, and function as a hydrogen storage material. Therefore, the utilization of the carbon nanotube in various electron industrial fields has been desired. In particular, the carbon nanotube can be any one of a semiconductor and a conductor if its atomic arrangement (chirality) slightly varies. Therefore, the carbon nanotube is highly expected to be a low-dimensional conductive material or a switching device of a nanometer size. The carbon nanotube has also been attracting attention as a field emission-type electron source or a hydrogen storage material. In addition, an attempt has been made to utilize the carbon nanotube as a probe of a tunneling electron microscope or interatomic microscope.

Meanwhile, the carbon nanotube is known to impart functions such as electrical conductivity, heat conductivity, and electromagnetic wave-shielding property. For example, it is known that an organic polymer such as polyamide, polyester, polyether, or polyimide, an inorganic polymer such as glass or ceramic, or the like is used as a matrix, and the matrix is composited with the carbon nanotube to provide a composite for a structural material having functions such as electrical conductivity, heat conductivity, and electromagnetic wave-shielding property.

For example, JP-A 2002-290094 discloses, as a conventional technique, an electromagnetic wave-shielding material composed of a thermoplastic resin material containing specific amounts of a carbon nanotube and a conductive fiber, and a mold composed of the electromagnetic wave-shielding material. According to the technique, there can be provided an electromagnetic wave-shielding material or the like having excellent electromagnetic wave-shielding property sufficient to prevent obstruction to a device due to an electromagnetic wave, especially excellent shielding property in a high frequency region.

Inaddition, JP-A2001-267782disclosesatechniqueinvolving: suspending a carbon nanotube into water to prepare a carbon nanotube/water mixture having a dielectric constant larger than that of water; and filling a space between 2 conductors with the mixture to form an organizer. According to the technique, an electromagnetic wave absorbing shield material having a dielectric constant larger than that of water can be produced as an absorber for an electromagnetic wave such as a microwave easily and at a low cost.

Furthermore, JP-A 2000-26760 discloses: a composition, which contains organopolysiloxane as a base compound and organosiloxane having a functional side chain and a curing catalyst to be mixed as crosslinking agents with the base compound; a composition containing ceramic particles and a solvent for high heat to be mixed with the particles; and a functional coating agent composition obtained by mixing a carbon nanotube and a carbon microcoil with a coating film-forming component of a glycidyl ether-type epoxy resin prepolymer prepared in the presence of a solution of an organic solvent such as perhydropolysilazane or metal oxide powder. According to the technique, there can be provided a coat which can be easily applied to have a desired thickness to thereby form a fast coating film, and which is provided with various functions such as excellent resistance heat generating property, static electricity preventing property, and electromagnetic wave-shielding property.

It has been difficult to use a carbon nanotube as a material because the carbon nanotube has a high aspect ratio and is very thin. Even a multi-wall carbon nanotube which has a relatively large diameter out of carbon nanotubes, which is inexpensive, and which can be synthesized in a large amount has a diameter of at most about 50 nm and a length of several micrometers, so it has a high aspect ratio and is very thin.

In view of the above, in the conventional techniques including those described above, when a carbon nanotube is to be used for an electromagnetic wave-shielding material or a conductive material, the carbon nanotube has been dispersed into a binder made of a polymer such as polyamide to form a coat, for example. However, the coat thus formed has a low possibility of contact between carbon nanotubes, so there arises a problem in that excellent features of a carbon nanotube itself such as high electron- and hole-transmission characteristics cannot be fully utilized.

Meanwhile, up to now, a coat or the like composed only of carbon nanotubes without the use of a binder has been merely an aggregate of carbon nanotubes. If a coat composed only of carbon nanotubes can be realized, the realization of a material capable of exerting excellent electromagnetic wave-absorption/transmission characteristics and direct current-transportation characteristics of a carbon nanotube as they are is basis can be expected. In particular, a coat in which carbon nanotubes are surely connected to each other to constitute a network structure is expected to fully exert the above characteristics peculiar to a carbon nanotube.

By the way, JP-A 2002-503204 discloses a technique involving: a carbon nanotube functionalized by chemical substitution or by adsorption of a functional component; a composite structure constituted by functionalized carbon nanotubes coupled with each other; a method of introducing a functional group onto the surface of such a carbon nanotube; and an application of a functionalized carbon nanotube. The document also discloses that carbon nanotubes can be crosslinked by using a functionalized carbon nanotube. However, the technique described in the document is basically such that a functional group having functionality is connected to a carbon nanotube to utilize the functionality of the functionalized carbon nanotube itself, and the document has no description relating to an application as a paint.

Therefore, an object of the present invention is to provide: a structure including a coat which is composed substantially only of carbon nanotubes and in which the carbon nanotubes are surely connected to each other to constitute a network structure; a liquid mixture such as a paint with which the structure can be formed; and a method of forming the structure.

### DISCLOSURE OF THE INVENTION

The object is achieved by the present invention described below. That is, according to the present invention, there are provided a liquid mixture characterized by containing: carbon nanotubes each having a functional group on its periphery; and a crosslinking agent capable of prompting a crosslinking reaction with the functional group, and a structure obtained by supplying and curing the liquid mixture. The structure of the present invention can be obtained by a method involving supplying the liquid mixture of the present invention to an object such as a substrate (including an applying object), or by a method involving: supplying the object with carbon nanotubes each having a functional group and a crosslinking agent capable of prompting a crosslinking reaction with the functional group separately; and curing the whole.

The liquid mixture of the present invention contains carbon nanotubes each having a functional group and a crosslinking agent capable of prompting a crosslinking reaction with the functional group. Therefore, a structure such as a coat can be easily formed by supplying (for example, applying) the liquid mixture and curing the liquid mixture, in which the carbon nanotubes mutually crosslink via crosslinked sites each formed through a crosslinking reaction between the functional group of each of the carbon nanotubes and the crosslinking agent to constitute a network of the carbon nanotubes.

The structure of the present invention to be obtained is cured in a matrix shape, and the carbon nanotubes are connected to each other via crosslinked sites. As a result, features of a carbon nanotube itself such as high electron- and hole-transmission characteristics can be sufficiently exerted.

In the present invention, examples of the functional group include -COOR (where R represents a substituted or unsubstituted hydrocarbon group). Introduction of a carboxyl group into carbon nanotubes is relatively easy, and the resultant substance (carbon nanotube carboxylic acid) has high reactivity. Therefore, after the formation of the substance, it is relatively easy to esterify the substance to convert its functional group into -COOR (where R represents a substituted or unsubstituted hydrocarbon group). The functional group easily prompts a crosslinking reaction and is suitable for formation of a structure such as a coat.

A polyol can be exemplified as the crosslinking agent corresponding to the functional group. A polyol is cured by a reaction with -COOR (where R represents a substituted or unsubstituted hydrocarbon group), and forms a robust crosslinked substance with ease. To be specific, one polyol selected from the group consisting of glycerin, ethylene glycol, butenediol, hexyenediol, hydroquinone, and naphthalenediol is preferable. Of those, each of glycerin and ethylene glycol reacts with the above functional groups well. Moreover, each of glycerin and ethylene glycol itself has high biodegradability, and applies a light load to the environment even when used in an excess amount at the time of production.

Other preferable examples of the functional group include -OH, -COOH, -COOR (where R represents a substituted or unsubstituted hydrocarbon group), -COX (where X represents a halogen atom), -NH₂, and -NCO. A selection of at least one functional group from the group consisting of the above functional groups is preferable, and in such a case, a crosslinking agent, which may prompt a crosslinking reaction with the selected functional group, is selected as the crosslinking agent.

Further, other preferable examples of the crosslinking agent include a polyol, a polyamine, a polycarboxylic acid, a polycarboxylate, a polycarboxylic acid halide, a polycarbodiimide, and a polyisocyanate. A selection of at least one crosslinking agent from the group consisting of the above crosslinking agents is preferable, and in such a case, a functional group, which may prompt a crosslinking reaction with the selected crosslinking agent, is selected as the functional group.

In particular, at least one functional group and one crosslinking agent are preferably selected respectively from the group exemplified as the preferable functional group and the group exemplified as the preferable crosslinking agent, so that a combination of the functional group and the crosslinking agent may prompt a crosslinking reaction with each other.

A not-self-polymerizable crosslinking agent is preferable as the crosslinking agent. In the structure of the present invention finally obtained by the liquid mixture of the present invention, a crosslinked site where the carbon nanotubes mutually crosslink has a crosslinking structure in which residues of the functional groups remaining after the crosslinking reaction are connected together with a connecting group, which is a residue of the crosslinking agent remaining after the crosslinking reaction.

If the crosslinking agent has property of polymerizing with another crosslinking agent (self-polymerizability), the connecting group may contain a polymer in which two or more crosslinking agents are connected. Therefore, a gap between carbon nanotubes can be controlled to the size of a residue of the used crosslinking agent. As a result, a desired network structure of carbon nanotubes can be obtained with high duplicability. Further, reducing the size of the crosslinking agent residue can extremely narrow a gap between carbon nanotubes electrically and physically.

Therefore, if the crosslinking agent is not self-polymerizable, the structure of the present invention to be obtained can exert the electrical and physical characteristics of a carbon nanotube itself in a high level.

In the present invention, the term "self-polymerizable" refers to property of which the crosslinking agents may prompt a polymerization reaction with each other in the presence of other components such as water or in the absence of other components. On the other hand, the term "not self-polymerizable" means that the crosslinking agent has no such property.

If a crosslinking agent which is not self-polymerizable is selected as the crosslinking agent, a crosslinked site, where carbon nanotubes in the structure of the present invention mutually crosslink, has primarily an identical crosslinking structure. Furthermore, the connecting group preferably employs hydrocarbon as its skeleton, and the number of carbon atoms of the hydrocarbon is preferably 2 to 10.

The liquid mixture may further contain a solvent. Depending on the kind of the crosslinking agent, the crosslinking agent may function as the solvent.

On the other hand, the method of forming a structure of the present invention is characterized by including: a supplying step of supplying a substrate with carbon nanotubes each having a functional group and a crosslinking agent capable of prompting a crosslinking reaction with the functional group; and a curing step of curing the whole by crosslinking the functional groups of the carbon nanotubes after the supply by using the crosslinking agent. When a liquid mixture is prepared prior to the supply, a mixing step of mixing the carbon nanotubes each having a functional group with the crosslinking agent capable of prompting a crosslinking reaction with the functional group to prepare the liquid mixture is performed prior to the supplying step. Furthermore, in order to form a structure using unreacted carbon nanotubes as starting materials, an adding step of introducing functional groups to the carbon nanotubes is performed prior to the mixing step.

Examples of the functional group include -COOR (where R represents a substituted or unsubstituted hydrocarbon group). Examples of the crosslinking agent at this time include polyols (especially glycerin and/or ethylene glycol). In the case of the combination, the curing step is desirably a step of curing by heating.

Of course, a not-self-polymerizable crosslinking agent is preferable as the crosslinking agent.

When the functional group is -COOR (where R represents a substituted or unsubstituted hydrocarbon group), the adding step is desirably a step of introducing a carboxyl group into a carbon nanotube to esterify the carbon nanotube.

The liquid mixture may further contain a solvent. Depending on the kind of the crosslinking agent, the crosslinking agent may function as the solvent.

Even in the method of forming a structure of the present invention, preferable examples of the functional group include -OH, -COOH, -COOR (where R represents a substituted or unsubstituted hydrocarbon group), -COX (where X represents a halogen atom), -NH₂, and -NCO. A selection of at least one functional group from the group consisting of the above functional groups is preferable, and in such a case, a crosslinking agent, which may prompt a crosslinking reaction with the selected functional group, is selected as the crosslinking agent.

Further, preferable examples of the crosslinking agent include a polyol, a polyamine, a polycarboxylic acid, a polycarboxylate, a polycarboxylic acid halide, a polycarbodiimide, and a polyisocyanate. A selection of at least one crosslinking agent from the group consisting of the above crosslinking agents is preferable, and in such a case, a functional group, whichmay prompt a crosslinking reaction with the selected crosslinking agent, is selected as the functional group.

In particular, at least one functional group and one crosslinking agent are preferably selected respectively from the group exemplified as the preferable functional group and the group exemplified as the preferable crosslinking agent, so that a combination of the functional group and the crosslinking agent may prompt a crosslinking reaction with each other.

### BRIEF DESCRIPTION OF THE DRAWINGS

Fig. 1 is a reaction scheme for synthesis of a carbon nanotube carboxylic acid in Example 1.
Fig. 2 is a chart of an infrared absorption spectrum of the carbon nanotube carboxylic acid obtained in the midst of the synthesis in Example 1.
Fig. 3 is a chart of an infrared absorption spectrum of a multi-wall carbon nanotube raw material itself.
Fig. 4 is a reaction scheme for esterification in Example 1.
Fig. 5 is a chart of an infrared absorption spectrum of a methyl esterified carbon nanotube carboxylic acid obtained in the midst of the synthesis in Example 1.
Fig. 6 is a reaction scheme for polymerization by an ester exchange reaction in Example 1.
Fig. 7 is a chart obtained by measuring an infrared absorption spectrum of a coat of Example 1.
Fig. 8(a) is a scanning electron microscope photograph (at a magnification of 5,000) of the coat of Example 1.
Fig. 8(b) is a scanning electron microscope photograph (at a magnification of 20,000) of the coat of Example 1.
Fig. 9 is a scanning electron microscope photograph (at a magnification of 30,000) of a single-wall carbon nanotube purified in Example 2.
Fig. 10 is a scanning electron microscope photograph (at a magnification of 30,000) of the single-wall carbon nanotube used as a raw material in Example 2.
Fig. 11 is a chart of an infrared absorption spectrum of a carbon nanotube carboxylic acid obtained in the midst of the synthesis in Example 2.
Fig. 12 is a chart of an infrared absorption spectrum of a methyl esterified carbon nanotube carboxylic acid obtained in the midst of the synthesis in Example 2.
Fig. 13 is a reaction scheme for polymerization by an ester exchange reaction in Example 2.
Fig. 14 is a chart obtained by measuring an infrared absorption spectrum of a coat of Example 2.
Fig. 15 is a scanning electron microscope photograph (at a magnification of 15,000) of the coat of Example 2.
Fig. 16 is a graph showing direct current-voltage characteristic measurements of coats of Examples 1 and 2 and Comparative Example 1.
Fig. 17 is a graph showing direct current-voltage characteristic measurements of a coat of Example 3.
Fig. 18 is a graph showing results of reflection spectra of samples of Examples 1 and 2 and Comparative Example 1.

### BEST MODE FOR CARRYING OUT THE INVENTION

Hereinafter, the present invention will be described in detail.

### [Liquid Mixture]

The liquid mixture of the present invention contains, as essential ingredients, carbon nanotubes each having a functional group and a crosslinking agent capable of prompting a crosslinking reaction with the functional group. The liquid mixture contains various additives as required.

An example of a usage form of the liquid mixture of the present invention includes a paint. The paint can form a coat as one mode of the structure of the present invention, and hence can find use in an extremely wide variety of applications. Hereinafter, the liquid mixture of the present invention will be described while emphasis is placed on a paint.

### (Carbon Nanotube)

In general, a carbon nanotube has a structure in which graphene sheets each having a hexagonal network of carbon atoms are arranged to form a tube, the graphene sheets being arranged in parallel with the axis of the tube. The carbon nanotubes are further classified into: a single-wall carbon nanotube (SWNT) having one graphene sheet; and a multi-wall carbon nanotube (MWNT) having multiple graphene sheets. What kind of structure a carbon nanotube has is determined to some degree by a synthesis method and a synthesis condition.

Carbon nanotubes, which are the main component in the present invention, may be single-wall carbon nanotubes or multi-wall carbon nanotubes each having two or more layers. Whether one or both types of carbon nanotubes are used (and, if only one type is used, which type is selected) may be decided appropriately taking into consideration the use of a coat or the cost.

Ones that are not exactly shaped like a tube, such as: a carbon nanohorn (a horn-shaped carbon nanotube whose diameter continuously increases from one end toward the other end) which is a variant of a single-wall carbon nanotube; a carbon nanocoil (a coil-shaped carbon nanotube forming a spiral when viewed in entirety) ; a carbon nanobead (a spherical bead made of amorphous carbon or the like with its center pierced by a tube); a cup-stacked nanotube; and a carbon nanotube with its outer periphery covered with a carbon nanohorn or amorphous carbon can be used as carbon nanotubes in the present invention.

Furthermore, ones that contain some substances inside, such as: a metal-containing nanotube which is a carbon nanotube containing metal or the like; and a peapod nanotube which is a carbon nanotube containing a fullerene or a metal-containing fullerene can be used as carbon nanotubes in the present invention.

As described above, in the present invention, it is possible to employ carbon nanotubes of any form, including common carbon nanotubes, variants of the common carbon nanotubes, and carbon nanotubes with various modifications, without a problem in terms of reactivity. Therefore, the concept of "carbon nanotube" in the present invention encompasses all of the above.

Those carbon nanotubes are conventionally synthesized through a known method such as arc discharge, laser ablation, or CVD, and the present invention can employ any of the methods. However, arc discharge in a magnetic field is preferable from the viewpoint of synthesizing a highly pure carbon nanotube.

A diameter of carbon nanotubes used in the present invention is preferably 0.3 nm or more and 100 nm or less. A diameter of the carbon nanotubes exceeding this upper limit undesirably results in difficult and costly synthesis. A more preferable upper limit of the diameter of a carbon nanotubes is 30 nm or less.

In general, the lower limit of the carbon nanotube diameter is about 0.3 nm from a structural standpoint. However, too small a diameter could undesirably lower the synthesis yield. It is therefore preferable to set the lower limit of the carbon nanotube diameter to 1 nm or more, more preferably 10 nm or more.

The length of carbon nanotubes used in the present invention is preferably 0.1 µm or more and 100 µm or less. A length of the carbon nanotubes exceeding this upper limit undesirably results in difficult synthesis or requires a special synthesis method raising cost. On the other hand, a length of the carbon nanotubes falling short of this lower limit undesirably reduces the number of crosslink bonding points per carbon nanotube. A more preferable upper limit of the carbon nanotube length is 10 µm or less, and a more preferable lower limit of the carbon nanotube length is 1 µm or more.

The appropriate carbon nanotube content in the liquid mixture of the present invention varies depending on the length and thickness of carbon nanotubes, whether single-wall carbon nanotubes or multi-wall carbon nanotubes are used, the type and amount of functional groups in the carbon nanotubes, the type and amount of crosslinking agent, the presence or absence of a solvent or other additive used and, if one is used, the type and amount of the solvent or additive, etc. The carbon nanotube content in the solution should be high enough to form a satisfactory coat after curing but not excessively high because the applicability deteriorates.

Specifically, the ratio of carbon nanotubes to the entire liquid mixture excluding the mass of the functional groups is 0.01 to 10 g/l, preferably 0.1 to 5 g/l, and more preferably 0.5 to 1.5 g/l, although the ranges cannot be determined uniquely if the parameters are different as described above.

The purity of the carbon nanotubes to be used is desirably raised by purifying the carbon nanotubes before preparation of the liquid mixture if the purity is not high enough. In the present invention, the higher the carbon nanotube purity, the better the result can be. Specifically, the purity is preferably 90% or higher, more preferably 95% or higher. A purification method for carbon nanotubes is not particularly limited, and any known purification method can be employed.

### (Functional Group)

In the present invention, carbon nanotubes can have any functional groups without particular limitations, as long as functional groups selected can be added to the carbon nanotubes chemically and can prompt a crosslinking reaction with any type of crosslinking agent. Specific examples of such functional groups include -COOR, -COX, -MgX, -X (where X represents halogen), -OR, -NR¹R², -NCO, -NCS, -COOH, -OH, -NH₂, -SH, -SO₃H, -R'CHOH, -CHO, -CN, -COSH, -SR, -SiR'₃ (In the above formulae, R, R¹, R², and R' each independently represent a substituted or unsubstituted hydrocarbon group.). Note that the functional groups are not limited to those examples.

Of those, it is preferable to select at least one functional group from the group consisting of -OH, -COOH, -COOR (where R represents a substituted or unsubstituted hydrocarbon group), -COX (where X represents a halogen atom), -NH₂, and -NCO. In that case, a crosslinking agent, which can prompt a crosslinking reaction with the selected functional group, is selected as the crosslinking agent.

In particular, -COOR (where R represents a substituted or unsubstituted hydrocarbon group) is particularly preferable. This is because a carboxyl group can be introduced into a carbon nanotube with relative ease, because the resultant substance (carbon nanotube carboxylic acid) can be easily introduced as a functional group by esterifying the substance, and because the substance has good reactivity with a crosslinking agent.

R in the functional group -COOR is a substituted or unsubstituted hydrocarbon group, and is not particularly limited. However, R is preferably an alkyl group having 1 to 10 carbon atoms, more preferably an alkyl group having 1 to 5 carbon atoms, and particularly preferably a methyl group or an ethyl group in terms of reactivity, solubility, viscosity, and ease of use as a solvent for a paint.

The amount of functional groups introduced cannot be determined uniquely because the amount varies depending on the length and thickness of a carbon nanotube, whether the carbon nanotube is of a single-wall type or a multi-wall type, the type of a functional group, etc. From the viewpoint of the strength of the crosslinked substance obtained, namely, the strength of the coat, a preferable amount of functional groups introduced is large enough to add two or more functional groups to each carbon nanotube. How functional groups are introduced into carbon nanotubes will be described in the section below titled [Method of Forming Structure].

### (Crosslinking Agent)

A crosslinking agent is an essential ingredient for the liquid mixture of the present invention. Any crosslinking agent can be used as long as the crosslinking agent is capable of prompting a crosslinking reaction with the functional groups of the carbon nanotubes. In other words, the type of crosslinking agent that can be selected is limited to a certain degree by the types of the functional groups. Also, the conditions of curing (heating, UV irradiation, visible light irradiation, air setting, etc.) as a result of the crosslinking reaction are naturally determined by the combination of those parameters.

Specific examples of the preferable crosslinking agent include a polyol, a polyamine, a polycarboxylic acid, a polycarboxylate, a polycarboxylic acid halide, a polycarbodiimide, and a polyisocyanate. It is preferable to select at least one cross-lining agent from the group consisting of the above crosslinking agents. In that case, a functional group which can prompt a reaction with the crosslinking agent is selected as the functional group.

At least one functional group and at least one crosslinking agent are particularly preferably selected respectively from the group consisting of the functional groups exemplified as the preferable functional groups and the group consisting of the crosslinking agents exemplified as the preferable crosslinking agents, so that a combination of the functional group and the crosslinking agent may prompt a crosslinking reaction with each other. The following Table 1 lists the combinations of the functional group of the carbon nanotubes and the corresponding crosslinking agent, which can prompt a crosslinking reaction, along with curing conditions of the combinations.

**Table 1**

| Functional group of carbon nanotube | Crosslinking agent | Curing condition |
|---|---|---|
| -COOR | Polyol | heat curing |
| -COX | Polyol | heat curing |
| -COOH | Polyamine | heat curing |
| -COX | Polyamine | heat curing |
| -OH | Polycarboxylate | heat curing |
| -OH | Polycarboxylic acid halide | heat curing heat curing |
| -NH₂ | Polycarboxylic acid | heat curing |
| -NH₂ | Polycarboxylic acid halide | heat curing |
| -COOH | Polycarbodiimide | heat curing |
| -OH | Polycarbodiimide | heat curing |
| -NH₂ | Polycarbodiimide | heat curing |
| -NCO | Polyol | heat curing |
| -OH | Polyisocyanate | heat curing |
| -COOH | Ammonium complex | heat curing |
| -COOH | Hydroquinone | heat curing |
| *where R represents a substituted or unsubstituted hydrocarbon group | | |
| *where X represents a halogen | | |

Of those combinations, preferable is the combination of -COOR (where R represents a substituted or unsubstituted hydrocarbon group) with good reactivity on a functional group side and a polyol, which forms a robust crosslinked substance with ease. The term "polyol" in the present invention is a generic name for organic compounds each having two or more OH groups. Of those, one having 2 to 10 (more preferably 2 to 5) carbon atoms and 2 to 22 (more preferably 2 to 5) OH groups is preferable in terms ofcrosslinkability, solvent compatibility when an excessive amount thereof is charged, treatability of waste liquid after a reaction by virtue of biodegradability (environmental suitability), yield of polyol synthesis, and so on. In particular, the number of carbon atoms is preferably lower within the above range because a gap between carbon nanotubes in the resultant structure can be narrowed to bring the carbon nanotubes into substantial contact with each other (to bring the carbon nanotubes close to each other). Specifically, glycerin and ethylene glycol are particularly preferable, and one or both of glycerin and ethylene glycol are preferably used as a crosslinking agent.

From another perspective, the crosslinking agent is preferably a not-self-polymerizable crosslinking agent. In addition to glycerin and ethylene glycol as examples of the polyols, butenediol, hexynediol, hydroquinone, and naphthalenediol are obviously not-self-polymerizable crosslinking agents. More generally, a prerequisite for the not-self-polymerizable crosslinking agent is to be without a pair of functional groups, which can prompt a polymerization reaction with each other, in itself. On the other hand, examples of a self-polymerizable crosslinking agent include one that has a pair of functional groups, which can prompt a polymerization reaction with each other (alkoxide, for example), in itself.

The content of the crosslinking agent in the liquid mixture of the present invention cannot be determined uniquely because the content varies depending on not only the type of the crosslinking agent (including whether the crosslinking agent is self-polymerizable or not self-polymerizable) but also the length and thickness of a carbon nanotube, whether the carbon nanotube is of a single-wall type or a multi-wall type, the type and amount of functional groups in the carbon nanotubes, the presence or absence of a solvent or other additive used and, if one is used, the type and amount of the solvent or additive, etc. In particular, glycerin, ethylene glycol, or the like itself does not have a very high viscosity and can function as a solvent. Therefore, glycerin, ethylene glycol, or the like can be added in an excess amount.

### (Other Additive)

The liquid mixture of the present invention may contain various additives including a solvent, a viscosity modifier, a dispersant, and a crosslinking accelerator.

A solvent is added when satisfactory applicability of the liquid mixture is not achieved with solely the crosslinking agent. A solvent that can be employed is not particularly limited, and may be appropriately selected according to the type of the crosslinking agent to be used. Specific examples of such a solvent include: organic solvents such as methanol, ethanol, isopropanol, n-propanol, butanol, methyl ethyl ketone, toluene, benzene, acetone, chloroform, methylene chloride, acetonitrile, diethyl ether, and tetrahydrofuran (THF) ; water; acidic aqueous solutions; and alkaline aqueous solutions. A solvent as such is added in an amount that is not particularly limited but determined appropriately by taking into consideration the applicability of the liquid mixture.

A viscosity modifier is added when sufficient applicability is not achieved with solely the crosslinking agent. A viscosity modifier that can be employed is not particularly limited, and may be appropriately selected according to the type of crosslinking agent to be used. Specific examples of such a viscosity modifier include methanol, ethanol, isopropanol, n-propanol, butanol, methyl ethyl ketone, toluene, benzene, acetone, chloroform, methylene chloride, acetonitrile, diethyl ether, and THF.

Some of those viscosity modifiers serve as a solvent when added in a certain amount, but it is meaningless to clearly distinguish the viscosity modifier from the solvent. A viscosity modifier as such is added in an amount that is not particularly limited but determined appropriately by taking into consideration the applicability.

A dispersant is added in order to maintain the dispersion stability of the carbon nanotubes or the crosslinking agent in the liquidmixture. Any one of various known surfactants, water-soluble organic solvents, water, acidic aqueous solutions, alkaline aqueous solutions, etc. can be employed as a dispersant. However, a dispersant is not always necessary since components themselves of the liquid mixture of the present invention have high dispersion stability. In addition, depending on the use of the structure after formation, the presence of impurities such as a dispersant in the structure may not be desirable. In such a case, of course, a dispersant is not added at all, or is added in a very small amount.

### (Dosage Form)

The liquid mixture of the present invention is, of course, of a liquid from the viewpoint of applicability. However, depending on the combination of the functional groups and the crosslinking agent, the mixture of them advances a crosslinking reaction, with the result that some liquid mixtures are cured and cannot be used for supply such as application. In such a case, it is desired that the liquid mixture be separated into two liquids (or two parts one of which is a solid matter such as a powder), and they be mixed prior to supply. A liquid mixture of a liquid separation type or a liquid-solid separation type such as a two-liquid type described above (including a "two-agent type" in which one of the two parts is a solid matter such as a powder, the same holds true for the following) is included in the concept of "liquid mixture". Therefore, it is needless to say that, even when components are separated into multiple liquids, powders, and the like, those constituting the composition of the liquid mixture of the present invention as a whole are included in the category of the liquid mixture of the present invention.

In the case of a one-liquid type, the liquid mixture of the present invention can be prepared by mixing the above essential ingredients. The essential ingredients may be vigorously stirred at the time of mixing by using a conventionally known stirring device such as an ultrasonic stirring device in order to enhance the dispersibility of the carbon nanotubes.

The liquid mixture of the present invention thus obtained has high dispersion stability of the carbon nanotubes and an appropriate viscosity, and hence has high applicability. In particular, when the content of carbon nanotubes is high, dispersion stability is typically very low because a general carbon nanotube is solvent-insoluble. However, the liquid mixture of the present invention has an appropriate combination of a carbon nanotube having a functional group and a crosslinking agent, and hence has high dispersion stability. In addition, the liquid mixture is basically composed only of components contributing to a reaction, so the liquid mixture has little waste and the possibility of contamination of impurities is reduced.

### [Structure]

The liquid mixture described above ("paint" when it is applied) is supplied (for example, "applied") to an appropriate substrate ("applying object" when the liquid mixture is applied) and is cured to obtain the structure of the present invention ("coat" when the liquid mixture is applied). The structure of the present invention can also be obtained by: supplying an appropriate substrate with carbon nanotubes each having a functional group and a crosslinking agent capable of prompting a crosslinking reaction with the functional group separately; and curing the whole. The supplying method and the curing method will be detailed in the section below titled [Method of Forming Structure]

A coat as an example of the structure will be mainly described in this section as well.

The structure of the present invention is in a state where carbon nanotubes are networked. More specifically, the structure is cured in a matrix shape, and the carbon nanotubes are connected to each other via crosslinked sites. As a result, features of a carbon nanotube itself such as high electron- and hole-transmission characteristics can be sufficiently exerted. That is, the structure of the present invention obtained by using the liquid mixture of the present invention has carbon nanotubes closely connected to each other and contains no other binder or the like. In other words, the structure is composed substantially only of the carbon nanotubes, so intrinsic properties of a carbon nanotube can be fully utilized.

Specific examples of applications where the structure is useful include: electron devices or electron materials such as a high-frequency wave absorbing film, an electric wave absorber, and a conductive film; and part of the electron devices or electron materials. In addition, when the structure is used as a filler for a resin, a structural material having strength much higher than thatoffiberreinforcedplastic (FRP) can be obtained. Furthermore, molecular structures having various functions are incorporated in advance into the crosslinking agent in the liquid mixture and are cured by the crosslinking agent, whereby the structure can exert the functions.

The thickness of the structure of the present invention can be widely selected from being very thin to being thick according to an application. For example, lowering the content of the carbon nanotubes in the liquid mixture used (simply, lowering the viscosity by diluting) and applying the liquid mixture as a thin film provide a very thin coat. Similarly, raising the content of the carbon nanotubes provides a thick coat. Further, repeating the application provides an even thicker coat. A very thin coat from a thickness of about 10 nm can be formed, and a thick coat without an upper limit can be formed through recoating. A possible film thickness with one coating is about 5 µm. A thicker structure can be formed by supplying the liquid mixture of the present invention to a mold irrespective of the mode of application.

In the structure of the present invention, a site where the carbon nanotubes mutually crosslink, that is, the crosslinked site formed through a crosslinking reaction between each of the functional groups of the carbon nanotubes and the crosslinking agent has a crosslinking structure in which residues of the functional groups remaining after the crosslinking reaction are connected together with a connecting group, which is a residue of the crosslinking agent remaining after the crosslinking reaction.

As described, in the liquid mixture of the present invention as a pre-stage for the formation of the structure of the present invention, the crosslinking agent, which is a component of the liquid mixture, is preferably not self-polymerizable. When the crosslinking agent is not self-polymerizable, the connecting group in the structure of the present invention to be finally formed is constructed from a residue of only one crosslinking agent. Thus, the gap between the carbon nanotubes to be crosslinked can be controlled to a size of a residue of the crosslinking agent used, to thereby provide a desired network structure of the carbon nanotubes with high duplicability. Further, reducing a size of a residue of the crosslinking agent can extremely narrow a gap between each of the carbon nanotubes both electrically and physically (carbon nanotubes are substantially in direct contact with each other).

Formation of the structure of the present invention with the liquid mixture of the present invention prepared by selecting a single functional group of the carbon nanotubes and a single not-self-polymerizable crosslinking agent results in the crosslinked site of the structure having an identical crosslinking structure (Example 1). Further, formation of the structure of the present invention with the liquid mixture of the present invention prepared by selecting even multiple types of functional groups of the carbon nanotubes and/or multiple types of not-self-polymerizable crosslinking agents results in the crosslinked sites of the structure mainly having a crosslinking structure based on a combination of the functional group and the not-self-polymerizable crosslinking agent mainly used (Example 2).

In contrast, formation of the structure of the present invention with the liquid mixture of the present invention prepared by selecting self-polymerizable crosslinking agents, without regard to whether the functional groups of the carbon nanotubes and the crosslinking agents are of single or multiple types, results in the crosslinked sites in the carbon nanotube structure where carbon nanotubes mutually crosslink without a main, specific crosslinking structure. This is because the crosslinked sites will be in a state where numerous connecting groups with different connecting (polymerization) numbers of the crosslinking agents coexist.

In other words, by selecting not-self-polymerizable crosslinking agents, the crosslinked sites, where the carbon nanotubes of the structure of the present invention crosslink, have a mainly identical crosslinking structure because a residue of only one crosslinking agent bonds with the functional groups. "Mainly identical" here is a concept including a case where all of the crosslinked sites have an identical crosslinking structure as described above (Example 1), as well as a case where the crosslinking structure based on a combination of the functional group and the not-self-polymerizable crosslinking agent mainly used becomes a main structure with respect to the total crosslinked sites as described above (Example 2).

When referring to "mainly identical", a "ratio of identical crosslinked sites" with respect to the total crosslinked sites will not have a uniform lower limit defined. The reason is that a case of giving a functional group or a crosslinking structure with an aim different from formation of a carbon nanotube network may be assumed, for example. However, in order to actualize high electrical or physical characteristics peculiar to carbon nanotubes with a strong network, a "ratio of identical crosslinked sites" with respect to the total crosslinked sites is preferably 50% or more, more preferably 70% or more, further more preferably 90% or more, and most preferably 100%, based on numbers. Those number ratios can be determined through, for example, a method involving measuring an intensity ratio of an absorption spectrum corresponding to the crosslinking structure with an infrared spectrum.

As described, a structure having the crosslinked site with a mainly identical crosslinking structure where carbon nanotubes mutually crosslink allows formation of a uniform network of the carbon nanotubes in a desired state. In addition, the carbon nanotube network can be constructed with homogeneous, satisfactory, and expected electrical or physical characteristics and high duplicability.

Further, the connecting group preferably contains hydrocarbon as a skeleton thereof. "Hydrocarbon as a skeleton" here refers to a main chain portion of the connecting group consisting of hydrocarbon, the main portion of the connecting group contributing to connecting together residues of the functional groups of carbon nanotubes to be crosslinked remaining after a crosslinking reaction. A side chain portion, where hydrogen of the main chain portion is substituted by another substituent, is not considered. Obviously, it is more preferable that the whole connecting group consist of hydrocarbon.

The hydrocarbon preferably has 2 to 10 carbon atoms, more preferably 2 to 5 carbon atoms, and further more preferably 2 to 3 carbon atoms. The connecting group is not particularly limited as long as the connecting group is divalent or more.

### [Method of Forming Structure]

The method of forming a structure of the present invention includes: a supplying step of supplying a substrate with carbon nanotubes each having a functional group and a crosslinking agent capable of prompting a crosslinking reaction with the functional group; and a curing step of curing the whole by crosslinking the functional groups of the carbon nanotubes after the supply by using the crosslinking agent. The method may further include a mixing step of mixing the carbon nanotubes each having a functional group with the crosslinking agent capable of prompting a crosslinking reaction with the functional group to prepare the liquid mixture prior to the supplying step. The method may further include an adding step of introducing functional groups to the carbon nanotubes prior to the mixing step.

When carbon nanotubes each having a functional group are used as starting materials, operations on and after the mixing step have only to be performed. When typical carbon nanotubes themselves are used as starting materials, operations on and after the adding step have only to be performed. In addition, in the operations on or before the mixing step, out of the liquid mixture of the present invention described above, a liquid mixture of a one-liquid type or a liquid mixture immediately before supply in which two-liquid types are mixed is prepared. The supply of those components may be such that a liquid mixture is prepared prior to the supply or such that the components are separately supplied to the substrate and mixed on the substrate.

Hereinafter, the method of forming a structure of the present invention starting from the adding step will be described. In the following description, emphasis is placed on a coat out of the structures.

### (Adding Step)

In the present invention, the adding step is a step of introducing desired functional groups into carbon nanotubes. How functional groups are introduced varies depending on the type of functional group and cannot be determined uniquely. One method involves adding a desired functional group directly. Another method involves: introducing a functional group that is easily added; and then substituting the entire functional group or a part thereof, or adding a different functional group to the former functional group, in order to obtain the target functional group.

Still another method involves applying a mechanochemical force to a carbon nanotube to break or modify a very small portion of a graphene sheet on the surface of the carbon nanotube, to thereby introduce various functional groups into the broken or modified portion.

Operations for the adding step are not particularly limited, and any known methods can be employed. Various addition methods disclosed in JP 2002-503204 A may be employed in the present invention depending on the purpose.

A description is given on a method of introducing -COOR (where R represents a substituted or unsubstituted hydrocarbon group), a particularly desirable functional group among the functional groups listed above. To introduce -COOR (where R represents a substituted or unsubstituted hydrocarbon group) into carbon nanotubes, carboxyl groups may be (1) added to the carbon nanotubes once, and then (2) esterified.

### (1) Addition of Carboxyl Group

To introduce carboxyl groups into carbon nanotubes, carboxyl groups are refluxed together with an acid having an oxidizing effect. This operation is relatively easy and is preferable since carboxyl groups with high reactivity can be added to carbon nanotubes. A brief description of the operation is given below.

Examples of an acid having an oxidizing effect include concentrated nitric acid, a hydrogen peroxide solution, a mixture of sulfuric acid and nitric acid, and aqua regia. Concentrated nitric acid is particularly used in concentration of preferably 5 mass% or higher, more preferably 60 mass% or higher.

A normal reflux method can be employed. The reflux temperature is preferably close to the boiling point of the acid used. When concentrated nitric acid is used, for instance, the temperature is preferably set to 120 to 130°C. The reflux preferably lasts for 30 minutes to 20 hours, more preferably for 1 hour to 8 hours.

Carbon nanotubes to which carboxyl groups are added (carbon nanotube carboxylic acid) are produced in the reaction liquid after the reflux. The reaction liquid is cooled down to room temperature and then is subj ected to a separation operation or washing as required, to thereby obtain the target carbon nanotube carboxylic acid.

### (2) Esterification

The target functional group -COOR (where R represents a substituted or unsubstituted hydrocarbon group) can be introduced by adding an alcohol to the obtained carbon nanotube carboxylic acid and dehydrating the mixture for esterification.

The alcohol used for the esterification is determined according to R in the formula of the functional group. That is, if R is CH₃, the alcohol is methanol, and if R is C₂H₅, the alcohol is ethanol.

A catalyst is generally used in the esterification, and a conventionally known catalyst such as sulfuric acid, hydrochloric acid, or toluenesulfonic acid can be used in the present invention. The use of sulfuric acid as a catalyst is preferable from the viewpoint of not prompting a side reaction in the present invention.

The esterification may be conducted by adding an alcohol and a catalyst to a carbon nanotube carboxylic acid and refluxing the mixture at an appropriate temperature for an appropriate time period. A temperature condition and a time period condition in this case depend on type of catalyst, type of alcohol, or the like and cannot be determined uniquely, but a reflux temperature is preferably close to the boiling point of the alcohol used. When methanol is used, for instance, the reflux temperature is preferably in the range of 60 to 70°C. Further, a reflux time period is preferably in the range of 1 to 20 hours, more preferably in the range of 4 to 6 hours.

A carbon nanotube with the functional group -COOR (where R represents a substituted or unsubstituted hydrocarbon group) added can be obtained by separating a reaction product from a reaction liquid after esterification and washing the reaction product as required.

### (Mixing Step)

The mixing step in the present invention is a step of mixing carbon nanotubes each having a functional group and a crosslinking agent capable of prompting a crosslinking reaction with the functional group to prepare a liquid mixture. The term "liquid mixture" refers to one of a liquid mixture of a one-liquid type and a liquid mixture immediately before supply such as application in which liquid mixtures of two-liquid types (separation types) are mixed included in the category of the liquid mixture of the present invention.

In the mixing step, other components described in the aforementioned section titled [Liquid Mixture] are mixed, in addition to the carbon nanotubes each having a functional group and the crosslinking agent. Then, an amount of a solvent or a viscosity modifier is preferably adjusted considering applicability of the liquidmixture, to thereby prepare a liquidmixture immediately before supply.

Simple stirring with a spatula and stirring with a stirrer of a stirring blade type, a magnetic stirrer, and a stirring pump may be used. However, to achieve higher degree of uniformity in dispersion of the carbon nanotubes to enhance storage stability while fully extending a network structure by crosslinking of the carbon nanotubes, an ultrasonic disperser or a homogenizer may be used for powerful dispersion. However, the use of a stirring device with a strong shear force of stirring such as a homogenizer may cut or damage the carbon nanotubes in the liquid mixture, thus the device may be used for a very short period of time.

### (Supplying Step)

In the present invention, a preferable example of the supplying step is a step of supplying a substrate with the liquid mixture immediately before supply obtained through operations on or before the mixing step. The supplying method is not limited. For example, when the liquid mixture is applied to an applying object as a substrate, any one can be selected from a wide range of methods including: a method involving dropping a droplet and spreading the droplet by using a squeegee; and a general method. Examples of the general method include spin coating, wire bar coating, cast coating, roll coating, brush coating, dip coating, spray coating, and curtain coating.

### (Curing Step)

In the present invention, the curing step is a step of curing by crosslinking the functional groups of the carbon nanotubes after the supply in the supplying step by using the crosslinking agent. The operation in the curing step is naturally determined depending on the combination of the functional groups and the crosslinking agent. The operation is, for example, as shown in Table 1 above. In the case of a combination of thermosetting ones, heating by means of various heaters and the like is desirable. In the case of a combination of UV curing ones, irradiation with an ultraviolet lamp or leaving under sunlight is desirable. Of course, in the case of a combination of air-setting ones, it is sufficient that they be left standing. The "left standing" is also interpreted as one of the operations performed in the curing step in the present invention.

In the case of a combination of a carbon nanotube added with a functional group -COOR (where R represents a substituted or unsubstituted hydrocarbon group) and a polyol (especially, glycerin and/or ethylene glycol), curing by heating (polyesterification by an ester exchange reaction) is performed. -COOR of the esterified carbon nanotube carboxylic acid and R'-OH (where R' represents a substituted or unsubstituted hydrocarbon group) of the polyol prompt an ester exchange reaction owing to heating. Then, such a reaction proceeds multi-dimensionally to crosslink carbon nanotubes. Finally, a structure is formed, in which the carbon nanotubes are connected to each other to constitute a network.

Conditions suitable for the above combination are exemplified below. To be specific, a heating temperature is in the range of preferably 50 to 500°C, or more preferably 150 to 200°C. To be specific, a heating time in the combination is in the range of preferably 1 minute to 10 hours, or more preferably 1 to 2 hours.

### <More Specific Example>

Hereinafter, the present invention will be described more specifically by way of examples. However, the present invention is not limited to the following examples.

### [Example 1 ··· Synthesis of Multi-wall Carbon Nanotube Paint crosslinked by using Glycerin and of Coat]

### (Adding Step)

### (1) Addition of Carboxyl Group ... Synthesis of Carbon Nanotube Carboxylic Acid

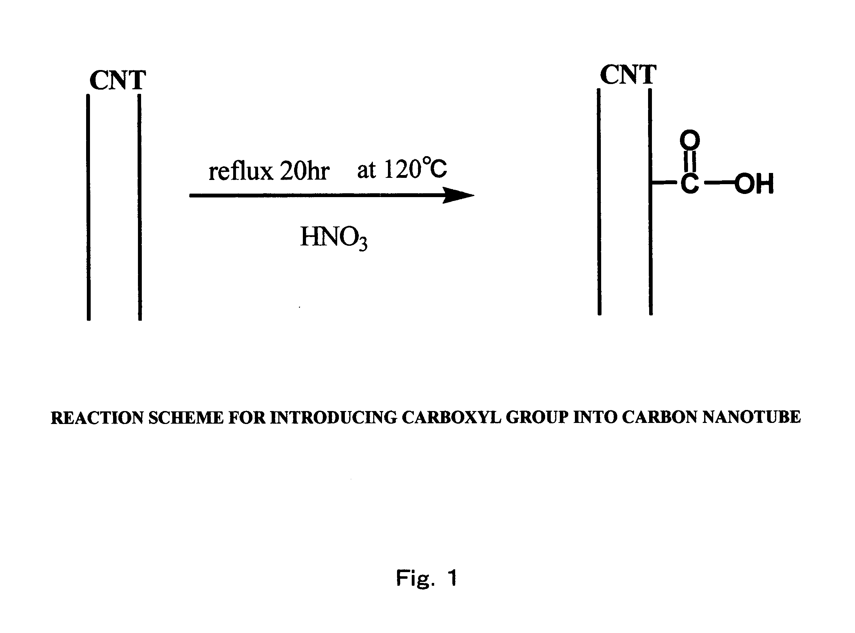

30 mg of multi-wall carbon nanotube powder (purity: 90%, average diameter: 30 nm, average length: 3 µm, available from Science Laboratories, Inc.) were added to 20 ml of concentrated nitric acid (60 mass% aqueous solution, available from Kanto Kagaku) for reflux at 120°C for 20 hours, to synthesize a carbon nanotube carboxylic acid. A reaction scheme of the above is shown in Fig. 1. In Fig. 1, a carbon nanotube (CNT) portion is represented by two parallel lines (the same applies for other figures relating to reaction schemes).

The temperature of the solution was returned to room temperature, and the solution was centrifuged at 5,000 rpm for 15 minutes to separate a supernatant liquid from a precipitate. The recovered precipitate was dispersed in 10 ml of pure water, and the dispersion liquid was centrifuged again at 5,000 rpm for 15 minutes to separate a supernatant liquid from a precipitate (the above process constitutes one washing operation). This washing operation was repeated five more times, and finally, a precipitate was recovered.

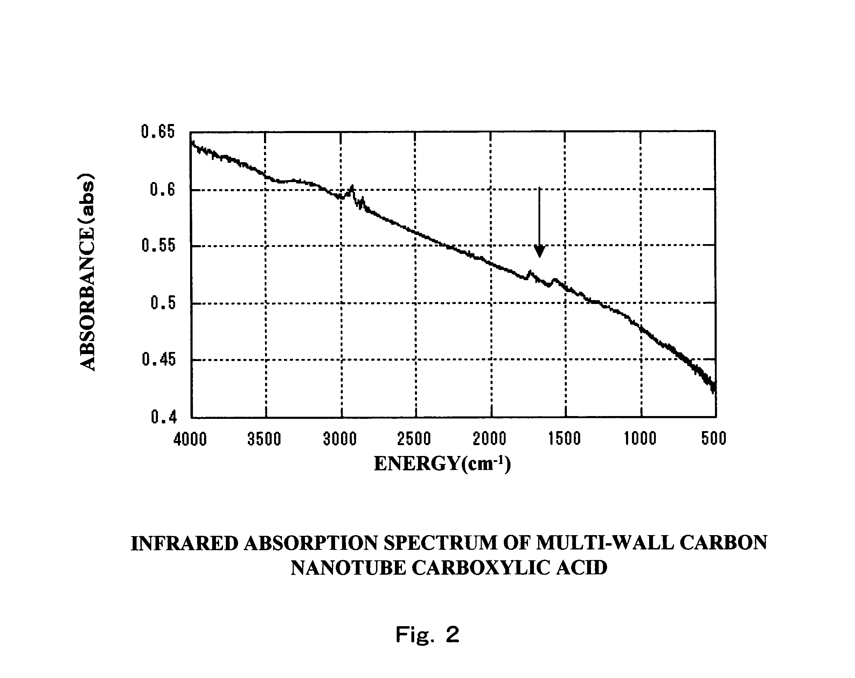

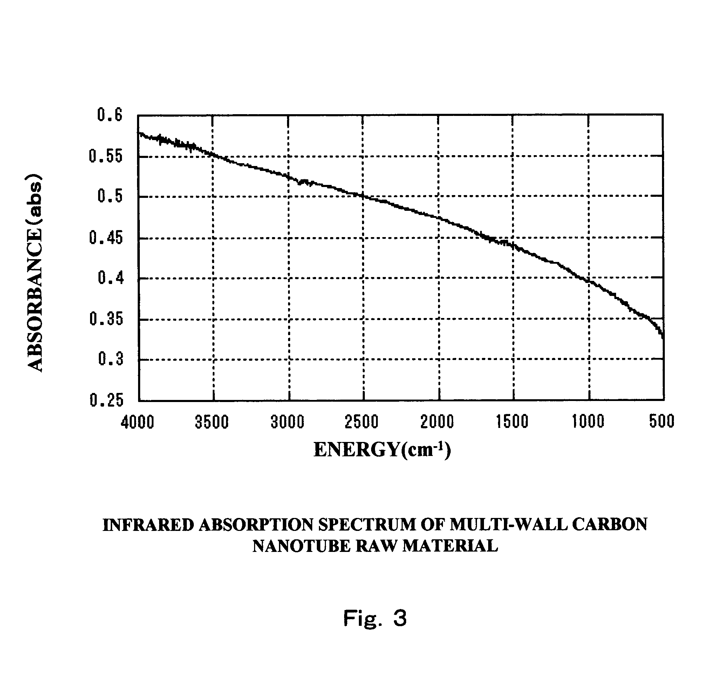

Fig. 2 shows a measurement of an infrared absorption spectrum of the recovered precipitate. Fig. 3 shows an infrared absorption spectrum of the used multi-wall carbon nanotube raw material itself. A comparison between both the spectra revealed that absorption at 1,735 cm⁻¹ characteristic of a carboxylic acid (a part indicated by an arrow in Fig. 2), which was not observed in the multi-wall carbon nanotube rawmaterial itself, was observed in the precipitate. This finding shows that a carboxyl group was introduced into a carbon nanotube by the reaction with nitric acid. In other words, this finding confirmed that the precipitate was a carbon nanotube carboxylic acid.

Addition of the recovered precipitate to neutral pure water confirmed that dispersibility was good. This result supports the result of the infrared absorption spectrum that a hydrophilic carboxyl group was introduced into a carbon nanotube.

### (2) Esterification

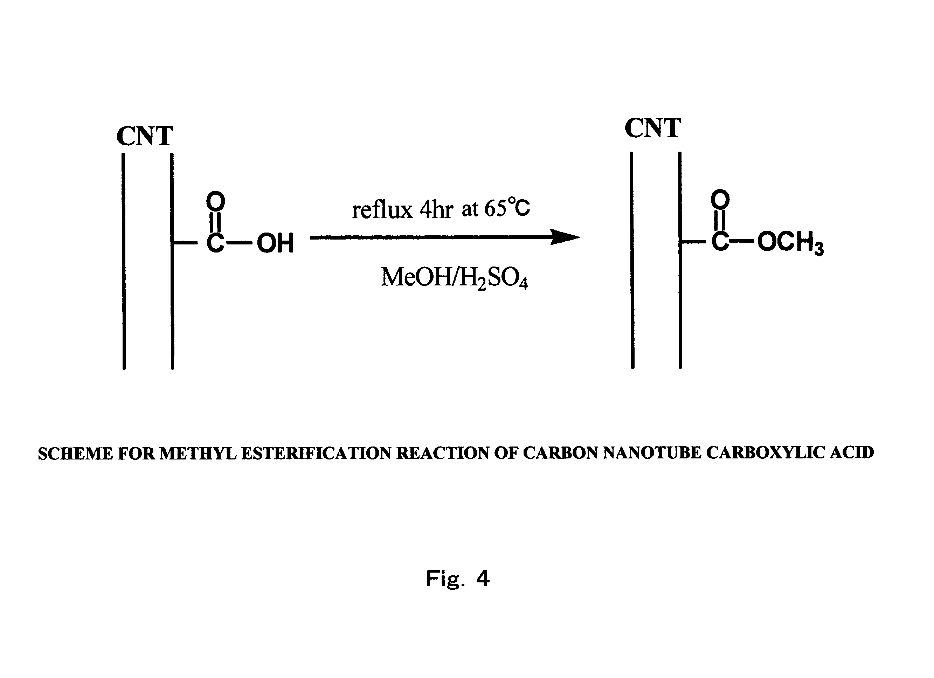

30 mg of the carbon nanotube carboxylic acid prepared in the above step were added to 25 ml of methanol (available from Wako Pure ChemicalIndustries,Ltd.). Then, 5ml of concentrated sulfuric acid (98 mass%, available from Wako Pure Chemical Industries, Ltd.) were added to the mixture, and the whole was refluxed at 65°C for 4 hours for methyl esterification. The reaction scheme for the above-described methyl esterification is shown in Fig. 4.

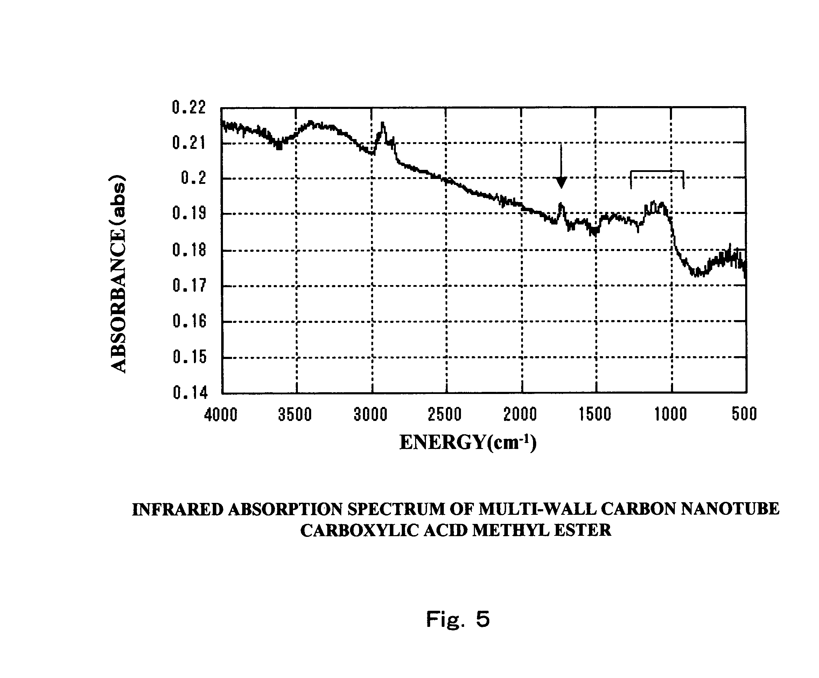

After the temperature of the solution had been returned to room temperature, the solution was filtered to separate a precipitate. The precipitate was washed with water, and was then recovered. Fig. 5 shows a measurement of an infrared absorption spectrum of the recovered precipitate. As can be understood from the spectrum shown in Fig. 5, absorption at 1,735 cm⁻¹ (a part indicated by an arrow in Fig. 5) and in the range of 1,000 to 1, 300 cm⁻¹ (a range surrounded by a U shape in Fig. 5) characteristic of ester were observed. This result confirmed that the carbon nanotube carboxylic acid was esterified.

### (Mixing Step)

10 mg of the carbon nanotube carboxylic acid methyl esterified in the above step were added to 5 ml of glycerin (available from Kanto Kagaku), and the whole was mixed using an ultrasonic disperser. Further, the mixture was added to 10 ml of methanol as a viscosity modifier, to thereby prepare a paint of Example 1 (liquid mixture of the present invention).

### (Supplying Step)

About 0.1 ml of the paint thus obtained was dropped and applied onto an SiO₂/Si substrate by using a Pasteur pipette.

### (Curing Step)

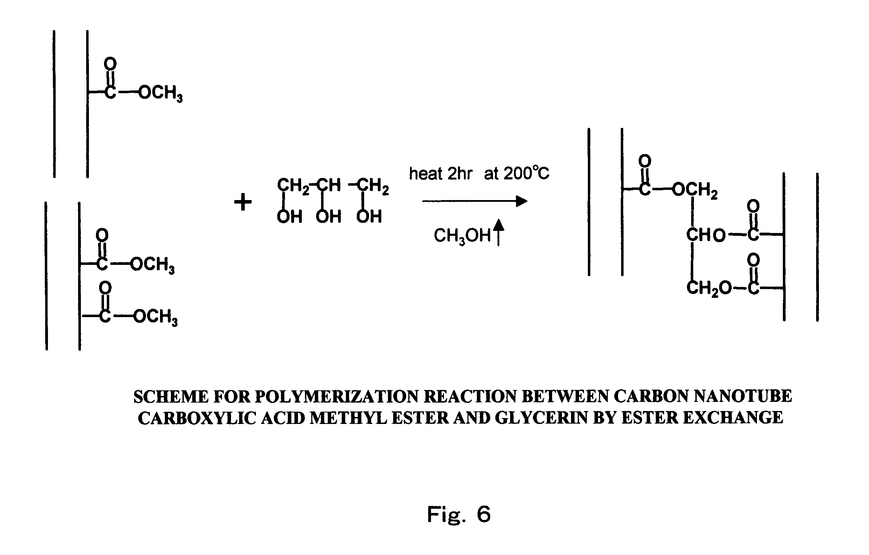

The substrate to which the paint of this example had been applied as described above was heated at 200°C for 2 hours to perform polymerization by an ester exchange reaction, to thereby form a coat. Fig. 6 shows the reaction scheme. Observation of the resultant coat of this example (reaction product, structure of the present invention) with an optical microscope at a magnification of about 10 to 20 confirmed that the coat had an extremely uniform film shape. This reveals that the paint or the coat of this example containing a crosslinking structure is very excellent in film forming property.

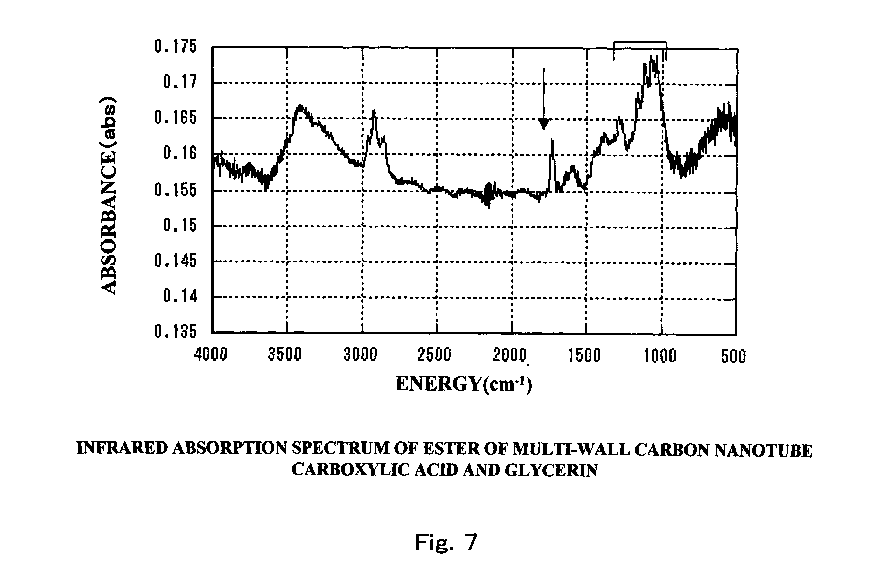

Fig. 7 shows a measurement of an infrared absorption spectrum of the resultant coat. As can be understood from the spectrum shown in Fig. 7, absorption at 1,735 cm⁻¹ (a part indicated by an arrow in Fig. 7) and in the range of 1, 000 to 1, 300 cm⁻¹ (a range surrounded by a U shape in Fig. 7) characteristic of ester were observed.

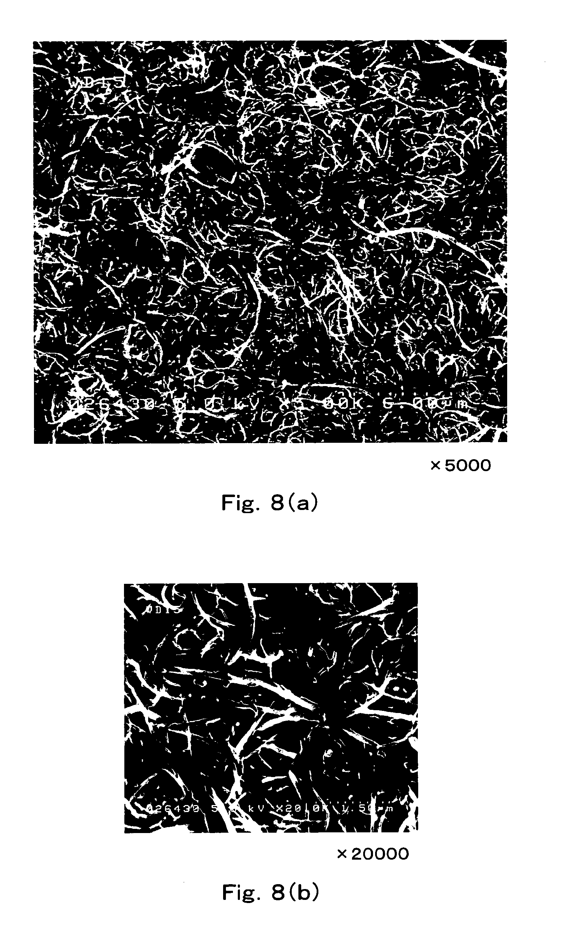

Fig. 8 (a) and Fig. 8 (b) eachshowa scanningelectronmicroscope (SEM) photograph of the resultant coat. Fig. 8 (a) is a photograph at a magnification of 5,000 and Fig. 8(b) is a photograph at a magnification of 20, 000. It should be noted that the magnification of a photograph involves some degree of error depending on the degree of enlargement of the photograph (the same holds true for the following various SEM photographs). The photograph of each of Fig. 8 (a) and Fig. 8 (b) shows the state where carbon nanotubes are extremely close to each other to be densely packed, although, of course, a state of crosslinking between carbon nanotubes cannot be observed from the photograph. Such a state as that of this example can never be obtained by merely depositing carbon nanotubes or by painting and hardening carbon nanotubes with a binder. This reveals that a coat having an extremely dense network of carbon nanotubes is formed.

### {Example 2···Synthesis of Single-wall Carbon Nanotube Paint crosslinked by using Glycerin and of Coat]

### (1) Purification of Single-wall Carbon Nanotube

Single-wall carbon nanotube powder (having a purity of 40%, available from Aldrich) was sieved (with a pore size of 125 µm) in advance to remove a coarse aggregate. 30 mg of the remainder (having an average diameter of 1.5 nm and an average length of 2 µm) were heated at 450°C for 15 minutes by means of a muffle furnace to remove a carbon substance other than a carbon nanotube. 15 mg of the remaining powder were sunk in 10 ml of a 5N aqueous solution of hydrochloric acid {prepared by diluting concentrated hydrochloric acid (a 35% aqueous solution, available from Kanto Kagaku) with pure water by 2 fold} for 4 hours to dissolve a catalyst metal.

The solution was filtered to recover a precipitate. The recovered precipitate was subjected to a combination of the steps of heating and sinking in hydrochloric acid 3 more times for purification. At that time, the heating condition was gradually made severer: the heating condition was initially 450°C for 20 minutes, then 450°C for 30 minutes, and finally 550°C for 60 minutes.

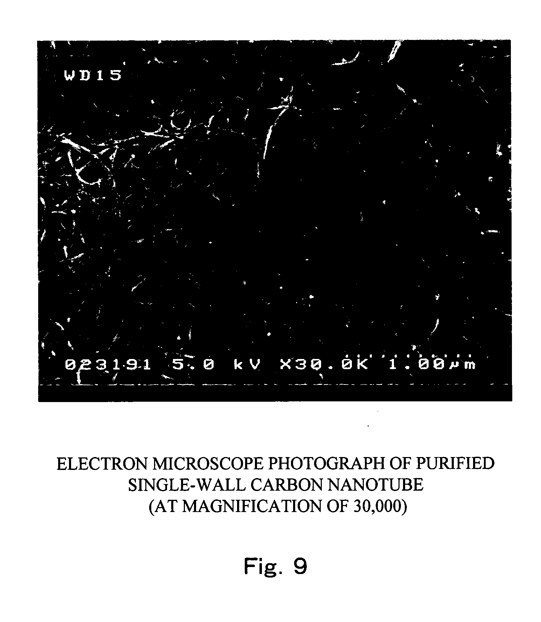

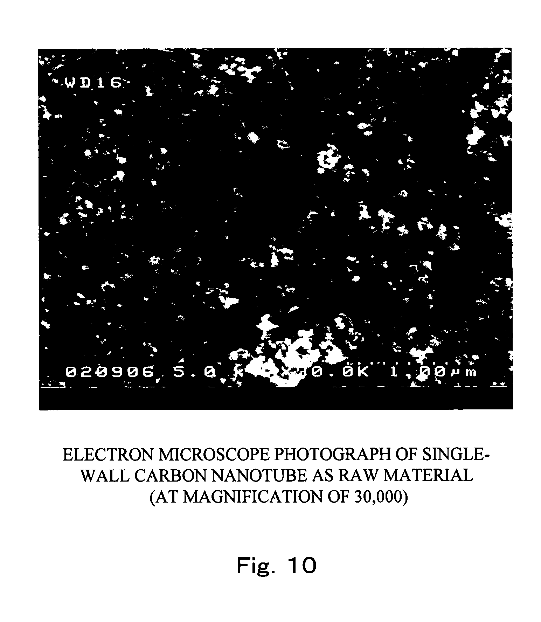

Fig. 9 shows an SEM photograph of the finally obtained precipitate (at a magnification of 30,000). Fig. 10 shows an SEM photograph of the carbon nanotube used as a raw material (at a magnification of 30, 000) for comparison. It can be understood that the carbon nanotube after the purification has a significantly increased purity as compared to that of the carbon nanotube before the purification (raw material) (to be specific, the purity after the purification is estimated to be 90% or more). It should be noted that the purified carbon nanotube finally obtained had a mass of about 5% of that of the raw material (1 to 2 mg).

The above operation was repeated several times to purify 15 mg or more of high-purity single-wall carbon nanotube powder.

### (2) Addition of Carboxyl Group ... Synthesis of Carbon Nanotube Carboxylic Acid

15 mg of the single-wall carbon nanotube powder (purity: 90%, average diameter: 1.5 nm, average length: 2 µm) purified through the above operations were added to 20 ml of concentrated nitric acid (60 mass% aqueous solution, available from Kanto Kagaku) for reflux at 120°C for 1.5 hours, to synthesize a carbon nanotube carboxylic acid.

The temperature of the solution was returned to room temperature, and the solution was centrifuged at 5,000 rpm for 15 minutes to separate a supernatant liquid from a precipitate. The recovered precipitate was dispersed in 10 ml of pure water, and the dispersion liquid was centrifuged again at 5,000 rpm for 15 minutes to separate a supernatant liquid from a precipitate (the above process constitutes one washing operation). This washing operation was repeated five more times, and finally, a precipitate was recovered.

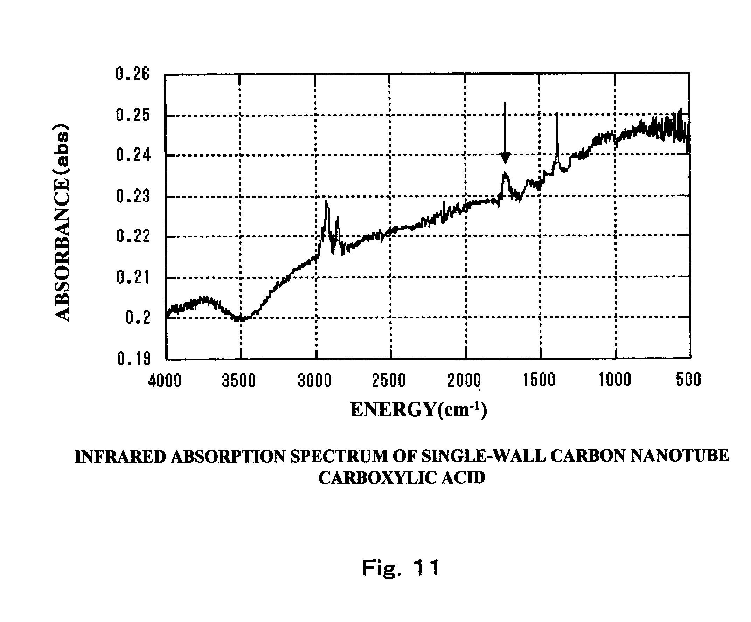

Fig. 11 shows a measurement of an infrared absorption spectrum of the recovered precipitate. As can be understood from the spectrum shown in Fig. 11, absorption at 1,735 cm⁻¹ characteristic of a carboxylic acid (a part indicated by an arrow in Fig. 11) was observed in the precipitate. This finding confirmed that the precipitate was a carbon nanotube carboxylic acid having a carboxyl group introduced into a carbon nanotube.

Addition of the recovered precipitate to neutral pure water confirmed that dispersibility was good. This result supports the result of the infrared absorption spectrum that a hydrophilic carboxyl group was introduced into a carbon nanotube.

### (3) Esterification

15 mg of the carbon nanotube carboxylic acid prepared in the above step were added to 25 ml of methanol (available from Wako Pure Chemical Industries, Ltd.). Then, 5 ml of concentrated sulfuric acid (98 mass%, available from Wako Pure Chemical Industries, Ltd.) were added to the mixture, and the whole was refluxed at 65°C for 4 hours for methyl esterification.

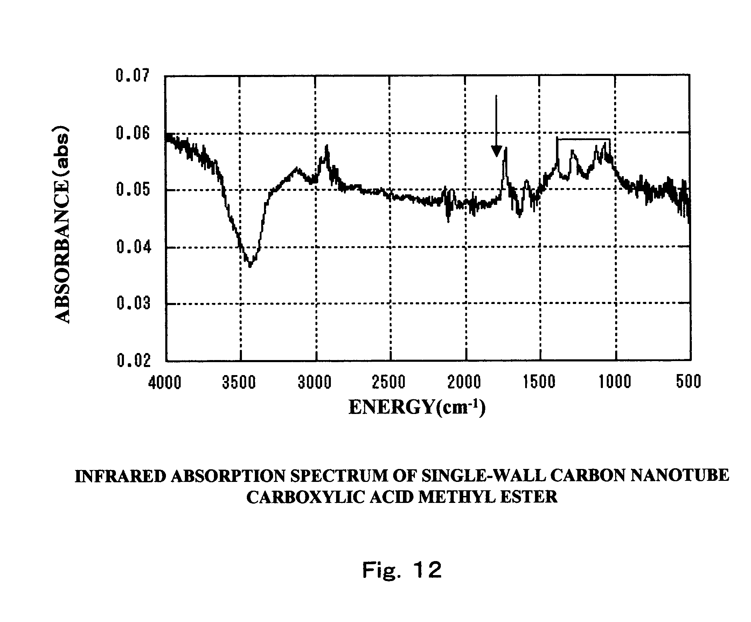

After the temperature of the solution had been returned to room temperature, the solution was filtered to separate a precipitate. The precipitate was washed with water, and was then recovered. Fig. 12 shows a measurement of an infrared absorption spectrum of the recovered precipitate. As can be understood from the spectrum shown in Fig. 12, absorption at 1,735 cm⁻¹ (a part indicated by an arrow in Fig. 12) and in the range of 1,000 to 1,300 cm⁻¹ (a range surrounded by a U shape in Fig. 12) characteristic of ester were observed. This result confirmed that the carbon nanotube carboxylic acid was esterified.

### (Mixing Step)

10 mg of the carbon nanotube carboxylic acid methyl esterified in the above step were added to 5 ml of glycerin (available from Kanto Kagaku), and the whole was mixed using an ultrasonic disperser. Further, the mixture was added to 10 ml of methanol as a viscosity modifier, to thereby prepare a paint of Example 2 (liquid mixture of the present invention).

### (Supplying Step)

About 0.1 ml of the paint thus obtained was dropped and applied onto the same substrate as that in Example 1 by using a Pasteur pipette.

### (Curing Step)

The substrate to which the paint of this example had been applied as described above was heated at 200°C for 2 hours to perform polymerization by an ester exchange reaction, to thereby form a coat (structure of the present invention).

### [Example 3··· Synthesis of Multi-wall Carbon Nanotube Paint crosslinked by using Ethylene Glycol and of Coat]

### (Adding Step)

### (1) Addition of Carboxyl Group ... Synthesis of Carbon Nanotube Carboxylic Acid

30 mg of multi-wall carbon nanotube powder (purity: 90%, average diameter: 30 nm, average length: 3 µm, available from Science Laboratories, Inc.) were added to 20 ml of concentrated nitric acid (60 mass% aqueous solution, available from Kanto Kagaku) for reflux at 120°C for 20 hours, to synthesize a carbon nanotube carboxylic acid.

The temperature of the solution was returned to room temperature, and the solution was centrifuged at 5,000 rpm for 15 minutes to separate a supernatant liquid from a precipitate. The recovered precipitate was dispersed in 10 ml of pure water, and the dispersion liquid was centrifuged again at 5,000 rpm for 15 minutes to separate a supernatant liquid from a precipitate (the above process constitutes one washing operation). This washing operation was repeated five more times, and finally, a precipitate was recovered.

Addition of the recovered precipitate to neutral pure water confirmed that dispersibility was good as in the carbon nanotube carboxylic acid of Example 1. This result allows one to judge that a carbon nanotube carboxylic acid having a carboxyl group introduced into a carbon nanotube was prepared.

### (2) Esterification

15 mg of the carbon nanotube carboxylic acid prepared in the above step were added to 20 ml of methanol (available from Wako Pure Chemical Industries, Ltd.). Then, 1 ml of concentrated sulfuric acid (98 mass%, available from Wako Pure Chemical Industries, Ltd.) was added to the mixture, and the whole was refluxed at 65°C for 4 hours for methyl esterification.

The temperature of the solution was returned to room temperature, and the solution was centrifuged at 5,000 rpm for 15 minutes to separate a supernatant liquid from a precipitate. The recovered precipitate was dispersed in 10 ml of methanol, and the dispersion liquid was centrifuged again at 5, 000 rpm for 10minutes to separate a supernatant liquid from a precipitate (the above process constitutes one washing operation). This washing operation was repeated five more times, and finally, a precipitate was recovered.

### (Mixing Step)

15 mg of the carbon nanotube carboxylic acid methyl esterified in the above step and 2 ml of ethylene glycol (available from Wako Pure Chemical Industries, Ltd.) were mixed. Further, the mixture was added to 10 ml of methanol as a viscosity modifier, to thereby prepare a paint of Example 3 (liquid mixture of the present invention).

### (Supplying Step)

About 0 .1 ml of the paint thus obtained was dropped and applied onto the same substrate as that in Example 1 by using a Pasteur pipette.

### (Curing Step)

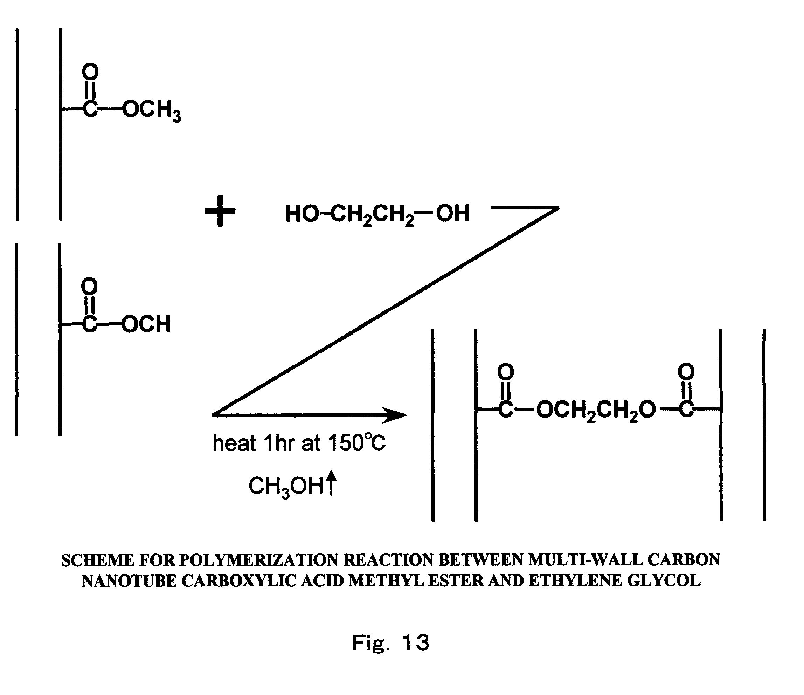

The substrate to which the paint of this example had been applied as described above was heated at 150°C for 1 hour to perform polymerization by an ester exchange reaction, to thereby form a coat (structure of the present invention). Fig. 13 shows the reaction scheme for the curing step.

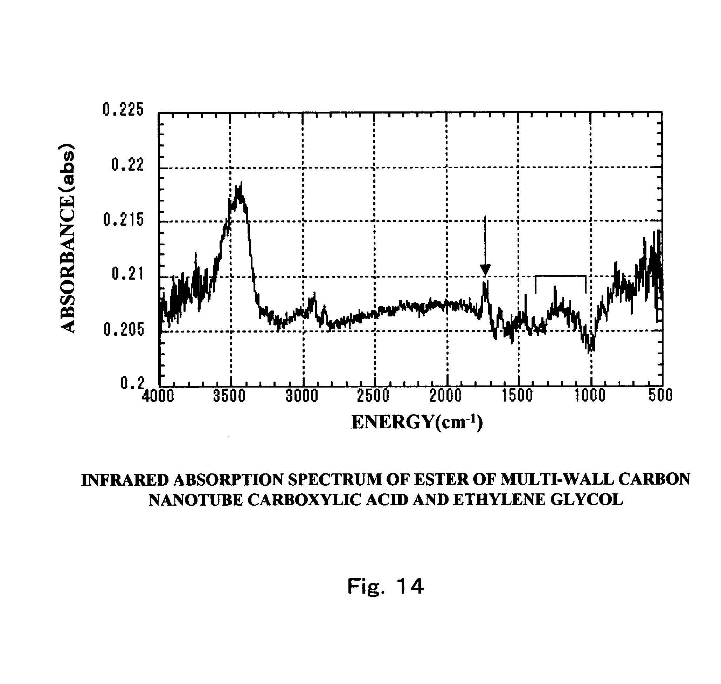

Fig. 14 shows a measurement of an infrared absorption spectrum of the resultant coat. As can be understood from the spectrum shown in Fig. 14, absorption at 1,735 cm⁻¹ (a part indicated by an arrow in Fig. 14) and in the range of 1,000 to 1,300 cm⁻¹ (a range surrounded by a U shape in Fig. 14) characteristic of ester were observed.

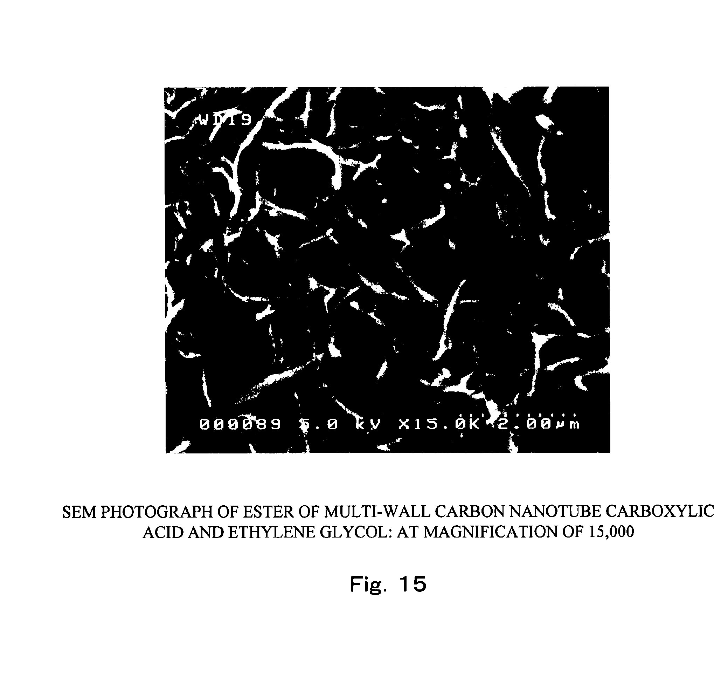

Fig. 15 shows an SEM photograph of the resultant coat (at a magnification of 15,000). The photograph of Fig. 15 shows the state where carbon nanotubes are extremely close to each other to be densely packed, although, of course, a state of crosslinking between carbon nanotubes cannot be observed from the photograph. This reveals that a coat having an extremely dense network of carbon nanotubes is formed.

### [Comparative Example 1 ··· Preparation of Carbon Nanotube/Polymer Composite]

A mechanochemical force (ball mill) was applied in advance to multi-wall carbon nanotubes (purity: 90%, average diameter: 30 nm, average length: 3 µm, available from Science Laboratories, Inc.) in such a manner that the surfaces of the carbon nanotubes would be easily reacted. 0.02 g of the carbon nanotubes was added to 14 g of concentrated nitric acid (60 mass% aqueous solution, available from Kanto Kagaku), and the whole was refluxed in an oil bath at 120°C for about 4 hours.

After that, centrifugation and decantation were repeated until the supernatant became neutral. At the time when the supernatant became neutral, the dispersion liquid was dried. The resultant was dispersed into pyridine to prepare a 0.05 mass% carbon nanotube dispersion liquid. 1 g of the carbon nanotube dispersion liquid and 0.56 g of a solution of U varnish A (20 mass% solution of polyimide precursor in N-methylpyrrolidone; available from Ube Industries, Ltd.) were sufficiently stirred and mixed, and the mixture was deaerated in a vacuum. By using a Pasteur pipette, about 0.1 ml of the resultant was dropped and cast-coated onto a glass epoxy substrate having a gold electrode prepared thereon. The resultant was left standing at room temperature for 1 day for film formation. The resultant was dried in a desiccator for an additional 1 day.

Thus, a carbon nanotube/polymer composite of Comparative Example 1 was prepared.

### (Comparative Example 2··· Multi-wall Carbon Nanotube not crosslinked)

10 mg of multi-wall carbon nanotube powder (purity: 90%, average diameter: 30 nm, average length: 3 µm, available from Science Laboratories, Inc.) were dispersed into 20 g of isopropyl alcohol. The dispersion liquid had extremely poor dispersibility, so it could not retain property as a paint.

By using a Pasteur pipette, about 0.1 ml of the resultant dispersion liquid was dropped and developed onto a substrate (Si wafer), and the whole was heated at about 100°C for 10 minutes to prepare a deposit of multi-wall carbon nanotubes, which were not crosslinked, of Comparative Example 2. Observation of the resultant deposit with an optical microscope at a magnification of about 10 to 20 confirmed that the deposit was separated in an island fashion as an aggregate, and presented no film shape. This reveals that the dispersion liquid or the deposit of this comparative example containing no crosslinking structure is poor in film forming property and can function as neither paint nor coat.

### [Evaluation Test]

### (Measurement of Direct Current Conductivity)

Direct current-voltage characteristics of the coat of Example 1 (MWNT-net (glycerin)), the coat of Example 2 (SWNT-net (glycerin)), and the coat of Example 3 (MWNT-net (ethylene glycol)) were measured. Each of the coats subjected to the test was newly formed on an SiO₂/SI substrate to have a thickness of 5 µm.

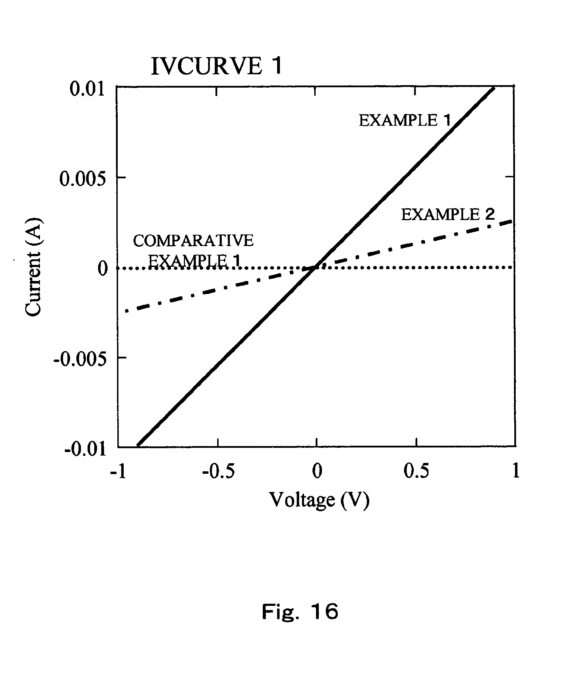

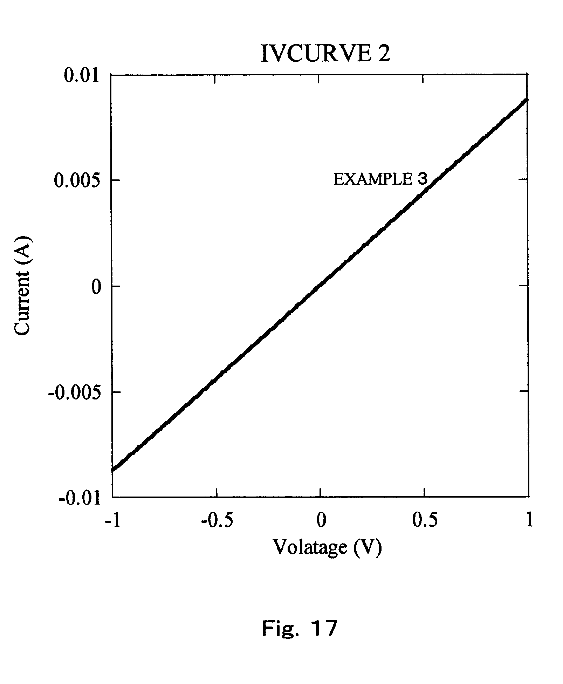

The measurement method involved: depositing a gold electrode on the coat formed on the SiO₂/Si substrate; and measuring the characteristics by means of a Picoammeter 4140B (manufactured by Hewlett-Packard Development Company, LP.) according to a two-terminal method. For comparison, the carbon nanotube/polymer composite of Comparative Example 1 was also subjected to the measurement. Fig. 16 and Fig. 17 show the direct current-voltage characteristic measurements. Table 2 below shows the conductivities of the respective coats determined from those measurements.

**Table 2**

| Comparison of direct current conductivity | |
|---|---|
| | Conductivity (Scm⁻¹) |
| Example 1 | 1.3 |
| Example 2 | 3.7 |
| Example 3 | 5.5 |
| Comparative Example 1 | 7.6×10⁻¹⁰ or less |

It has been understood that the conductivity of each of the coats of Examples 1 to 3 composed of carbon nanotubes containing crosslinking structures is extremely high as compared to that of the coat of Comparative Example 1 prepared by dispersing a multi-wall carbon nanotube into a polymer. As compared to general materials, the conductivity of each of the coats of Examples 1 to 3 is much higher than that of a carbon paste (about 40 Scm⁻¹) and is comparable to that of polyaniline as a conductive polymer (about 5 Scm⁻¹) The deposit of Comparative Example 2 did not have a shape of a coat, so it could not be subjected to the current-voltage characteristic measurement.

### (Measurement of Reflection Loss Spectrum)

In general, an excellent electric wave absorber has as small a thickness as possible and as large a reflection loss as possible. Here, an actually required specification, that is, "a reflection loss of 6 dB or more at a thickness in a vertical incidence direction of 0.5 mm" was set before evaluation was performed.

RF transmission characteristics of: the respective coats of Examples 1 to 3 and Comparative Example 1; and the deposit of Comparative Example 2 were measured. Each of the coats and the deposit subjected to the test was newly formed on a glass epoxy substrate having prepared thereon a gold electrode divided at a 0.5-mm pitch, to have a thickness of 5 µm.

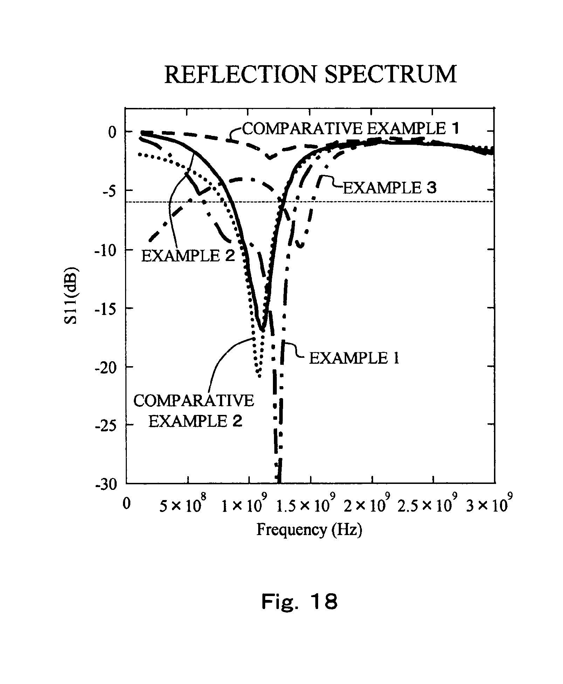

The measurement was performed by using a Network Analyzer 8753ES (manufactured by Agilent Technologies). 2 parameters, S11 and S21, were measured by using 2 ports, to thereby determine a reflection loss spectrum. The measurement frequency at this time was set to be in the range of 10 kHz to 3 GHz. Fig. 18 shows the results of the reflection spectra of the respective samples. Table 3 summarizes a frequency band having a reflection loss of 6 dB or more and the band width of the frequency band.

**Table 3**

| (All values are represents in Hz units) | | | |
|---|---|---|---|
| | Band width of frequency band having reflection loss of 6 dB or more | Frequency band having reflection loss of 6 dB or more | |
| | | Lower limit | Upper limit |
| Example 1 | 7.6×10⁸ | 6.2×10⁸ | 1.4×10⁹ |
| Example 2 | 4.3×10⁸ | 8.7×10⁸ | 1.3×10⁹ |
| Example 3 | 2.3×10⁸ | 1.3×10⁸ | 1.5×10⁹ |
| Comparative Example 1 | 0 | - | - |
| Comparative Example 2 | 4.5×10⁸ | 8.0×10⁸ | 1.3×10⁹ |

Each of the coats of Examples 1 to 3 composed of carbon nanotubes containing crosslinking structures has a relatively wide range where a reflection loss becomes 6 dB or more. In particular, the range of the coat of Example 1 where a reflection loss became 6 dB or more ranged from 620 MHz to 1.4 GHz, and the band width of the range reached 760 MHz. It should be noted that the test was performed on a film much thinner than a general electric wave absorber. Therefore, the structure of the present invention, if formed to have a larger thickness, is expected to provide an extremely high reflection loss. In addition, in the structure of the present invention, a void is still observed between carbon nanotubes. So, if the coat is compressed, a far higher reflection loss can be easily attained.

On the other hand, the reflection loss of the coat of Comparative Example 1 prepared by dispersing a multi-wall carbon nanotube into a polymer was at most about 2 dB in the measurement range, and the coat had no band where a reflection loss became 6 dB or more. The coat of Comparative Example 2 is a deposit of carbon nanotubes themselves, so it has a relatively wide range where a reflection loss becomes 6 dB or more. However, the deposit is actually unable to form a film, so it cannot function as an electric wave absorber in view of its shape.

As described above, according to the present invention, there can be provided: a structure composed substantially only of carbon nanotubes and having a network structure in which the carbon nanotubes are surely connected to each other; a liquid mixture with which the structure can be formed; and a method of forming the structure.

## Claims

1. A liquid mixture **characterized by** comprising:
carbon nanotubes each having a functional group; and
a crosslinking agent capable of prompting a crosslinking reaction with the functional group.

2. A liquid mixture according to claim 1, **characterized in that** each of the functional groups comprises -COOR (where R represents a substituted or unsubstituted hydrocarbon group).

3. A liquid mixture according to claim 2, **characterized in that** the crosslinking agent comprises a polyol.

4. A liquid mixture according to claim 2, **characterized in that** the crosslinking agent comprises glycerin and/or ethylene glycol.

5. A liquid mixture according to claim 1, **characterized by** further comprising a solvent.

6. A liquid mixture according to claim 5, **characterized in that** the crosslinking agent further functions as a solvent.

7. A liquid mixture according to claim 1, **characterized in that**:
the functional groups comprise at least one functional group selected from the group consisting of -OH, -COOH, -COOR (where R represents a substituted or unsubstituted hydrocarbon group), -COX (where X represents a halogen atom), -NH₂, and -NCO; and
the crosslinking agent comprises a crosslinking agent capable of prompting a crosslinking reaction with the selected functional groups.

8. A liquid mixture according to claim 1, **characterized in that**:
the crosslinking agent comprises at least one crosslinking agent selected from the group consisting of a polyol, a polyamine, a polycarboxylic acid, a polycarboxylate, a polycarboxylic acid halide, a polycarbodiimide, and a polyisocyanate; and
each of the functional groups comprises a functional group capable of prompting a crosslinking reaction with the selected crosslinking agent.

9. A liquid mixture according to claim 1, **characterized in that**:
the functional groups comprise at least one functional group selected from the group consisting of -OH, -COOH, -COOR (where R represents a substituted or unsubstituted hydrocarbon group), -COX (where X represents a halogen atom), -NH₂, and -NCO;
the crosslinking agent comprises at least one crosslinking agent selected from the group consisting of a polyol, a polyamine, a polycarboxylic acid, a polycarboxylate, a polycarboxylic acid halide, a polycarbodiimide, and a polyisocyanate; and
the functional groups and the crosslinking agent are respectively selected so that a combination of the selected functional groups and crosslinking agent is capable of prompting a mutual crosslinking reaction.

10. A liquid mixture according to claim 1, **characterized in that** the crosslinking agent comprises a not-self-polymerizable crosslinking agent.

11. A structure comprising:
carbon nanotubes each having a functional group; and
a crosslinking agent capable of prompting a crosslinking reaction with the functional group, **characterized in that** the structure is obtained by:
supplying the carbon nanotubes and the crosslinking agent; and
curing the whole to mutually crosslink the carbon nanotubes via crosslinked sites each formed through a crosslinking reaction between the functional group of each of the carbon nanotubes and the crosslinking agent.

12. A structure according to claim 11, **characterized in that** the supply of the carbon nanotubes each having a functional group and the crosslinking agent capable of prompting a crosslinking reaction with the functional group is performed by supplying a liquid mixture containing the carbon nanotubes and the crosslinking agent.

13. A structure according to claim 11, **characterized in that** each of the functional groups comprises -COOR (where R represents a substituted or unsubstituted hydrocarbon group).

14. A structure according to claim 13, **characterized in that** the crosslinking agent comprises a polyol.

15. A structure according to claim 13, **characterized in that** the crosslinking agent comprises glycerin and/or ethylene glycol.

16. A structure according to claim 12, **characterized in that** the liquid mixture further contains a solvent.

17. A structure according to claim 16, **characterized in that** the crosslinking agent further functions as a solvent.

18. A structure according to claim 11, **characterized in that** the crosslinking agent comprises a not-self-polymerizable crosslinking agent.

19. A structure according to claim 11, **characterized in that** each of the crosslinked sites comprises a crosslinking structure in which residues of the functional groups remaining after the crosslinking reaction are connected together with a connecting group employing hydrocarbon as its skeleton.

20. A structure according to claim 19, **characterized in that** the connecting group employs as its skeleton hydrocarbon having 2 to 10 carbon atoms.

21. A method of forming a structure, **characterized by** comprising:
a supplying step of supplying a substrate with carbon nanotubes each having a functional group and a crosslinking agent capable of prompting a crosslinking reaction with the functional group; and
a curing step of curing the whole by crosslinking the functional groups of the carbon nanotubes after the supply by using the crosslinking agent.

22. A method of forming a structure according to claim 21, **characterized by** further comprising a mixing step of mixing the carbon nanotubes each having a functional group with the crosslinking agent capable of prompting a crosslinking reaction with the functional group to prepare the liquid mixture prior to the supplying step.

23. A method of forming a structure according to claim 22, **characterized by** further comprising an adding step of introducing functional groups to the carbon nanotubes prior to the mixing step.

24. A method of forming a structure according to claim 23, **characterized in that** the adding step comprises a step of introducing a carboxyl group into a carbon nanotube to esterify the carbon nanotube.

25. A method of forming a structure according to claim 21, **characterized in that** each of the functional groups comprises -COOR (where R represents a substituted or unsubstituted hydrocarbon group).

26. A method of forming a structure according to claim 21, **characterized in that**:
each of the functional groups comprises -COOR (where R represents a substituted or unsubstituted hydrocarbon group); and
the crosslinking agent comprises a polyol.

27. A method of forming a structure according to claim 21, **characterized in that**:
each of the functional groups comprises -COOR (where R represents a substituted or unsubstituted hydrocarbon group); and
the crosslinking agent comprises glycerin and/or ethylene glycol.

28. A method of forming a structure according to claim 21, **characterized in that**:
each of the functional groups comprises -COOR (where R represents a substituted or unsubstituted hydrocarbon group);
the crosslinking agent comprises a polyol; and
the curing step comprises a step of curing by heating.

29. A method of forming a structure according to claim 21, **characterized in that** the liquid mixture further contains a solvent.

30. A method of forming a structure according to claim 29, **characterized in that** the crosslinking agent further functions as a solvent.

31. A liquid mixture according to claim 21, **characterized in that**:
the functional groups comprise at least one functional group selected from the group consisting of -OH, -COOH, -COOR (where R represents a substituted or unsubstituted hydrocarbon group), -COX (where X represents a halogen atom), -NH₂, and -NCO; and
the crosslinking agent comprises a crosslinking agent capable of prompting a crosslinking reaction with the selected functional groups.

32. A liquid mixture according to claim 21, **characterized in that**:
the crosslinking agent comprises at least one crosslinking agent selected from the group consisting of a polyol, a polyamine, a polycarboxylic acid, a polycarboxylate, a polycarboxylic acid halide, a polycarbodiimide, and a polyisocyanate; and
each of the functional groups comprises a functional group capable of prompting a crosslinking reaction with the selected crosslinking agent.

33. A liquid mixture according to claim 21, **characterized in that**:
the functional groups comprise at least one functional group selected from the group consisting of -OH, -COOH, -COOR (where R represents a substituted or unsubstituted hydrocarbon group), -COX (where X represents a halogen atom), -NH₂, and -NCO;
the crosslinking agent comprises at least one crosslinking agent selected from the group consisting of a polyol, a polyamine, a polycarboxylic acid, a polycarboxylate, a polycarboxylic acid halide, a polycarbodiimide, and a polyisocyanate; and
the functional groups and the crosslinking agent are respectively selected so that a combination of the selected functional groups and crosslinking agent is capable of prompting a mutual crosslinking reaction.

34. A method of forming a structure according to claim 21, **characterized in that** the crosslinking agent comprises a not-self-polymerizable crosslinking agent.
